# EUROPEAN PATENT APPLICATION

(11) **EP 4 617 338 A1**
(43) Date of publication of application: **17.09.2025**
(21) Application number: 23888771.5
(22) Date of filing: 09.11.2023
(51) Int. Cl.: C09J 7/38, C09J 201/00

(54) **WOUND BODY OF ADHESIVE BODY AND METHOD FOR PRODUCING SAME**

(30) Priority: 11.11.2022 JP 2022181326
(71) Applicant: NITTO DENKO CORPORATION, Ibaraki-shi Osaka 567-8680 (JP)
(72) Inventor: SHIMOKAWA, Kayo, Ibaraki-shi, Osaka 567-8680 (JP); TSUKAMOTO, Narumi, Ibaraki-shi, Osaka 567-8680 (JP); MORISHITA, Hiromitsu, Ibaraki-shi, Osaka 567-8680 (JP)
(74) Representative: Gill Jennings & Every LLP
(86) International application number: PCT/JP2023/040421
(87) International publication number: WO 2024/101426

(57) **Abstract**

A problem to be solved by the present invention is to provide a wound body of an adhesive body that does not cause a decrease in adhesive strength of the adhesive body or a deterioration in appearance due to glue lacking after unwinding, even though the adhesive body including an adhesive layer as an outermost layer does not include a release liner. The present invention relates to a wound body formed by cheese-winding an adhesive body including an adhesive layer as an outermost layer, in which a lead angle is 2° to 40°, and relates to a method for producing a wound body of an adhesive body including an adhesive layer as an outermost layer, the method including a step of cheese-winding the adhesive body such that a lead angle is 2° to 40°.

## Description

### TECHNICAL FIELD

The present invention relates to a wound body of an adhesive body and a method for producing the same.

### BACKGROUND ART

When two or more kinds of articles are to be bonded together, an adhesive member such as a double-sided tape may be used, but when the articles to be bonded have complex shapes or a bonding area is narrow, the bonding is difficult. In order to perform the bonding, the double-sided tape may need to be cut to narrow widths or punched, resulting in disposal of a large amount of unnecessary release liners and unnecessary parts after processing, and an amount of waste and an amount of CO₂ emission are increased.

In order to solve the above problems, an adhesive body such as a threadlike adhesive body is used. The adhesive body is a product in a form that does not require a release liner, and therefore can greatly contribute to reducing waste. On the other hand, since the adhesive body does not include a release liner, there was a problem that when the adhesive body is stored and transported as a wound body in a roll shape, adhesive strength thereof is decreased and appearance thereof deteriorates due to glue lacking.

Making a threadlike adhesive body or the like into a wound body is disclosed in, for example, Patent Literatures 1 and 2.

### CITATION LIST

### PATENT LITERATURE

Patent Literature 1: JPH03-231980A
Patent Literature 2: JP2021-161403A

### SUMMARY OF INVENTION

### TECHNICAL PROBLEM

However, although Patent Literature 1 describes winding a threadlike adhesive body in a cheese winding manner around a reel, a specific angle of the cheese winding is not described. Although Patent Literature 2 describes traverse winding (cheese winding) of an adhesive body with a separator around a reel, an appropriate angle is not described.

In view of the above problems, the present invention aims to provide a wound body of an adhesive body that does not cause a decrease in adhesive strength of the adhesive body or a deterioration in appearance due to glue lacking after unwinding, even though the adhesive body including an adhesive layer as an outermost layer does not include a release liner.

### SOLUTION TO PROBLEM

The present inventors conducted diligent studies to solve the above problems. As a result, it was found that in a wound body formed by cheese-winding an adhesive body including an adhesive layer as an outermost layer, by setting a lead angle within a specific range, even though the adhesive body does not include a release liner, adhesive strength of the adhesive body does not decrease and appearance thereof does not deteriorate due to glue lacking after unwinding, thereby completing the present invention.

That is, the present invention relates to the following.
[1] A wound body formed by cheese-winding an adhesive body including an adhesive layer as an outermost layer, in which
   a lead angle is 2° to 40°.
[2] The wound body according to [1], in which
   the adhesive body contains a core material and an adhesive.
[3] The wound body according to [1] or [2], in which
   the adhesive body is a threadlike adhesive body.
[4] A method for producing a wound body of an adhesive body including an adhesive layer as an outermost layer, the method including:
   a step of cheese-winding the adhesive body such that a lead angle is 2° to 40°.
[5] The method according to [4], in which
   the adhesive body is a threadlike adhesive body.

### ADVANTAGEOUS EFFECTS OF INVENTION

A wound body according to an embodiment of the present invention is a wound body formed by cheese-winding an adhesive body including an adhesive layer as an outermost layer, in which a lead angle is 2° to 40°. Even though the adhesive body including the adhesive layer as an outermost layer does not include a release liner, a decrease in adhesive strength of the adhesive body or a deterioration in appearance due to glue lacking will not occur after unwinding.

### BRIEF DESCRIPTION OF DRAWINGS

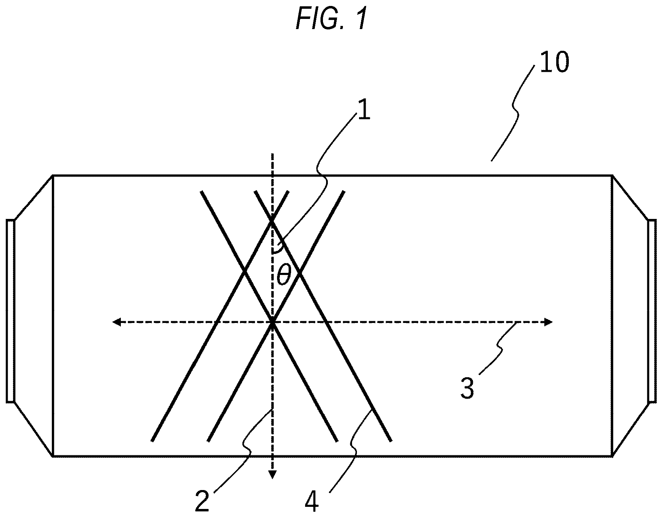

FIG. 1 is a schematic diagram of a wound body for illustrating a definition of a lead angle.

### DESCRIPTION OF EMBODIMENTS

Hereinafter, an embodiment of a packaged article according to the present invention will be described in detail.

Note that the present invention is not limited to the embodiment to be described below. When an expression "to" is used in the present specification, it is used as an expression including numerical values or physical property values before and after it. Furthermore, in the following drawing, members and parts having the same functions may be denoted by the same reference numerals, and duplicate descriptions may be omitted or simplified.

### <Wound Body>

A wound body of the present embodiment is a wound body formed by cheese-winding an adhesive body including an adhesive layer as an outermost layer, in which a lead angle is 2° to 40°. The lead angle is preferably 5° to 35°, more preferably 10° to 30°, and still more preferably 12° to 28°.

The wound body of the present embodiment is a wound body of an adhesive body in which surfaces of adhesive layers are in contact with each other, and since the adhesive layers in contact with each other can be peeled off at an interface after adhering to each other, no release liner is required.

In the wound body of the present embodiment, the surfaces of the adhesive layers of the adhesive body are in contact with each other, the adhesive body is wound into a roll shape, and the wound body includes a hollow portion.

A definition of the lead angle in the present specification will be explained in detail with reference to FIG. 1.

FIG. 1 is an example schematically illustrating the definition of the lead angle of the adhesive body in the wound body of the present embodiment.

In the present specification, a lead angle 1 refers to an angle between a rotation direction 2 of a wound body 10 and an adhesive body 4 wound in a width direction 3 of the wound body 10. The lead angle 1 is indicated by θ in FIG. 1.

In the wound body of the present embodiment, it is also preferable that the lead angle 1 changes by -70% or more and +70% or less as compared with the lead angle at an innermost layer portion of the wound body 10 (in the present specification, referring to a portion where the adhesive body is wound around the innermost layer portion with a weight of about 5 g or more and 10 g or less) during winding from the innermost layer portion to an outermost layer portion (in the present specification, referring to a portion where a weight of the adhesive body per wound body is wound up to 98% or more of a specified winding amount of the wound body).

In the present specification, a change in the lead angle of -70% or more and +70% or less during winding from the innermost layer portion to the outermost layer portion as compared with the lead angle at the innermost layer portion of the wound body means that, for example, when the lead angle at the innermost layer portion is 10°, the lead angle from the innermost layer portion to the outermost layer portion changes in a range of 3° to 17°.

From the viewpoint of obtaining an effect of preventing extrusion of yarns in a winding width direction caused by large amount of winding by a portion where the lead angle increases from the innermost layer portion, achieves a maximum value, and then decreases, and from the viewpoint of obtaining an effect of preventing a trouble that the adhesive body falls off from the winding width, which is called cob-webbing, and the fallen adhesive body gets caught on other portions of the wound body during advanced processing resulting in breakage of the wound body by a portion where the lead angle decreases, achieves a minimum value, and then increases, it is particularly preferable that the lead angle gradually increases, then gradually decreases, and then gradually increases from the innermost layer portion to the outermost layer portion.

It is preferable that at least one maximum value and one minimum value are present from the innermost layer portion to the outermost layer portion, and an S-shaped change is particularly preferable.

In the wound body of the present embodiment, the lead angle may or may not be constant as long as the maximum value and the minimum value of the lead angle are within a range of 2° to 40°. The lead angle is preferably 5° to 35°, more preferably 10° to 30°, and still more preferably 12° to 28°.

When the lead angle is less than 2°, the adhesive strength of the adhesive body may decrease and/or the appearance may deteriorate due to glue lacking after unwinding. Furthermore, a winding diameter at a center in a left-right direction of the wound body may differ, high or low edges may occur, and the appearance of the wound body may be deteriorated.

On the other hand, when the lead angle exceeds 40°, in addition to the decrease in adhesive strength of the adhesive body and/or the deterioration in appearance due to glue lacking after unwinding, it becomes necessary to make a length of the wound body in the width direction excessively large beyond a general range, which causes significant inconvenience in production. A winding density is reduced, which may increase a volume of the wound body. Furthermore, since traverse control during winding becomes complicated, mechanical wear and load may be large and parts may be consumed.

A reason why the decrease in adhesive strength of the adhesive body and/or the deterioration in appearance due to glue lacking after unwinding are prevented by setting the lead angle to 2° or more is as follows. When the lead angle is 2° or more, a contact area at intersections between the wound adhesive body is prevented from becoming excessively large, and as a result, the adhesive body is prevented from adhering strongly to each other when the wound body is stored, and the adhesive is prevented from falling off during unwinding.

A reason why the decrease in adhesive strength of the adhesive body after unwinding and/or the deterioration in appearance due to glue lacking are prevented by setting the lead angle to 40° or less is as follows. When the lead angle is 40° or less, (i) a frequency with which the adhesive body moves back and forth in the width direction of the wound body during unwinding is reduced, thereby preventing the adhesive from falling off due to friction with other adhesive bodies accompanying the movement back and forth in the width direction of the wound body; (ii) the frequency with which the adhesive body moves back and forth in the width direction of the wound body during unwinding is reduced, thereby preventing the adhesive from falling off due to friction between the unwound adhesive body and a guide roll that receives the unwound adhesive body accompanying the movement back and forth in the width direction of the wound body; (iii) an increase in pressure between the adhesive bodies during storage of the wound body due to an excessively small contact area at the intersections between the wound adhesive bodies is prevented, thereby preventing the adhesive from falling off during unwinding; or a combination of two or more of (i) to (iii) is achieved. The winding traverse control is easy, and the mechanical wear and load is reduced, resulting in less inclusion of iron powder and foreign matters. Furthermore, the winding density can be increased, which reduces an effect of tension on the core material.

The wound body of the present embodiment may be in a form in which the adhesive body is cheese-wound around a winding core, or in a form in which the adhesive body is cheese-wound without a winding core.

When using a device or the like that unwinds the adhesive body by rotating the wound body around the hollow portion as an axis, the adhesive body exposed on the hollow portion does not stick to the device or the like, thereby improving workability, and therefore it is preferable that the wound body in the present embodiment is one in which the adhesive body is cheese-wound around a winding core.

A material of the winding core is not particularly limited, and for example, paper and plastic can be used.

In addition, a size of the winding core is not particularly limited. An outer diameter of the winding core may be, for example, 4 cm or more and 20 cm or less. An inner diameter of the winding core may be, for example, 3 cm or more and 19 cm or less. A width of the winding core may be, for example, 1 cm or more and 100 cm or less.

### [Adhesive Body]

In the wound body of the present embodiment, the adhesive body includes an adhesive layer as an outermost layer. The adhesive layer contains an adhesive formed of an adhesive composition. The adhesive is not particularly limited, and any known adhesive can be used. Examples thereof include an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive. Among these, from the viewpoint of adhesiveness, the acrylic adhesive, urethane-based adhesive, silicone-based adhesive, rubber-based adhesive, and polyester-based adhesive are preferred, and the acrylic adhesive is particularly preferred since the adhesiveness can be easily controlled. Note that one kind of the adhesive may be used alone, or two or more kinds thereof may be used in combination. The adhesive in the present embodiment is preferably a pressure-sensitive adhesive that has adhesiveness at room temperature and can be stuck to a surface of an adherend by a pressure generated when a surface of the adhesive and the surface of the adherend are brought into contact with each other. When the adhesive is a pressure-sensitive adhesive, the adhesive does not need to be heated and can be applied to an adherend that is sensitive to heat.

Note that as the adhesive, either a solvent-type adhesive or a water-dispersible adhesive can be used, and it is preferable that crosslinking is performed by drying (solvent volatilization or heating) an adhesive composition and the crosslinking is rapidly completed after drying. This is because new crosslinking does not increase after surfaces of the adhesive layer come into contact with each other. Here, from the viewpoint of enabling high-speed coating, being environmentally friendly, and having a small influence (swelling or dissolution) on a base or the core material caused by a solvent, the water-dispersible adhesive is preferred, and a water-dispersible acrylic adhesive is more preferred.

Here, the term "acrylic adhesive" refers to an adhesive containing an acrylic polymer as a base polymer (a main component of polymer components, that is, a component that accounts for 50 weight% or more). The term "acrylic polymer" refers to a polymer having a monomer having at least one (meth)acryloyl group in one molecule (hereinafter, this may be referred to as an "acrylic monomer") as a main constituent monomer component (a main component of the monomer, that is, a component that accounts for more than 50 weight% of a total amount of monomers that constitute the acrylic polymer). In the present specification, the term "(meth)acryloyl" comprehensively refers to acryloyl and methacryloyl. Similarly, the term "(meth)acrylic acid ester" comprehensively refers to acrylic acid ester and methacrylic acid ester, and the term "(meth)acrylic" comprehensively refers to acrylic and methacrylic.

The acrylic polymer is preferably, for example, a polymer of a monomer raw material that contains alkyl (meth)acrylate as a main monomer and may further contain a sub-monomer copolymerizable with the main monomer. The main monomer herein refers to a component that accounts for more than 50 weight% of the monomer composition in the monomer raw material.

As the alkyl (meth)acrylate, examples thereof include a compound represented by General Formula (3).

CH₂=C(R¹)COOR² (3)

(In the formula, R¹ represents a hydrogen atom or a methyl group, and R² represents an alkyl group having 2 to 14 carbon atoms.)

Examples of R² include an ethyl group, a propyl group, an isopropyl group, a butyl group, an isobutyl group, an isoamyl group, a hexyl group, a heptyl group, a 2-ethylhexyl group, an isooctyl group, an isononyl group, and an isodecyl group. Among these, as R², an alkyl group having 2 to 10 carbon atoms, such as a butyl group and a 2-ethylhexyl group, is preferred. The above alkyl (meth)acrylate can be used alone or in combination of two or more kinds thereof.

In a monomer mixture containing the alkyl (meth)acrylate as a main component, a ratio of the alkyl (meth)acrylate [for example, the above-mentioned (meth)acrylic acid C₂₋₁₄ alkyl ester] is generally 80 weight% or more (for example, about 80 weight% to 99.8 weight%), preferably 85 weight% or more (for example, about 85 weight% to 99.5 weight%), and more preferably 90 weight% or more (for example, about 90 weight% to 99 weight%).

The monomer mixture generally contains a functional group-containing monomer (thermally crosslinkable functional group-containing monomer) in order to introduce crosslinking points for thermal crosslinking. By using the functional group-containing monomer as a comonomer component, the adhesive strength to the adherend is also improved.

Examples of the functional group-containing monomer include carboxyl group-containing monomers or acid anhydrides thereof, such as acrylic acid, methacrylic acid, itaconic acid, maleic acid, crotonic acid, and maleic anhydride; hydroxyl group-containing monomers, such as 2-hydroxyethyl (meth)acrylate, 2-hydroxypropyl (meth)acrylate, and 2-hydroxybutyl (meth)acrylate; amide group-containing monomers, such as (meth)acrylamide, N,N-dimethyl(meth)acrylamide, N-methylol(meth)acrylamide, N-methoxymethyl(meth)acrylamide, and N-butoxymethyl(meth)acrylamide; amino group-containing monomers, such as dimethylaminoethyl (meth)acrylate and t-butylaminoethyl (meth)acrylate; glycidyl group-containing monomers, such as glycidyl (meth)acrylate; (meth)acrylonitrile, N-(meth)acryloylmorpholine, and N-vinyl-2-pyrrolidone. Among these, the carboxyl group-containing monomers such as acrylic acid or acid anhydrides thereof are preferred. The above functional group-containing monomers may be used alone or in combination of two or more kinds thereof.

The amount of the functional group-containing monomer used is, for example, about 0.5 parts by weight to 12 parts by weight, and preferably about 1 part by weight to 8 parts by weight, based on 100 parts by weight of the alkyl (meth)acrylate.

The monomer mixture may contain other copolymerizable monomers as necessary in order to improve properties such as cohesive strength. Examples of such copolymerizable monomers include methyl (meth)acrylate: vinyl esters such as vinyl acetate; aromatic vinyl compounds such as styrene and vinyl toluene; (meth)acrylic acid esters of cyclic alcohols such as cyclopentyl di(meth)acrylate and isobornyl (meth)acrylate; and (meth)acrylic acid esters of polyhydric alcohols such as neopentyl glycol di(meth)acrylate, hexanediol di(meth)acrylate, propylene glycol di(meth)acrylate, trimethylolpropane tri(meth)acrylate, tetramethylolmethane tri(meth)acrylate, and dipentaerythritol hexa(meth)acrylate. These copolymerizable monomers can also be used alone or in combination of two or more kinds thereof.

It is also preferable to add a crosslinking agent to these acrylic adhesives. As the crosslinking agent used for the acrylic adhesives, a commonly used crosslinking agent can be used, and examples thereof include silane-based crosslinking agents, organic peroxides, epoxy-based compounds, amino group-containing compounds, organic metal salts, metal alcoholates, metal chelates, hydrazide-based crosslinking agents, carbodiimide-based crosslinking agents, isocyanate-based crosslinking agents, and silanol-based crosslinking agents. Among these, organic metal salts, metal chelates, hydrazide-based crosslinking agents, and silane-based crosslinking agents are preferred since crosslinking is rapidly completed after the adhesive composition is dried. In the case of a water-dispersible adhesive, a hydrazide-based crosslinking agent and a silane-based crosslinking agent are particularly preferred. The crosslinking agent may be either oil-soluble or water-soluble, and may be used alone or in combination of two or more kinds thereof.

As the silane-based crosslinking agent, it is preferable to use a silane-based monomer copolymerizable with the above-mentioned alkyl (meth)acrylate. The silane-based monomer is not particularly limited as long as it is a polymerizable compound having a silicon atom, and a silane compound having a (meth)acryloyl group, such as a (meth)acryloyloxyalkylsilane derivative, is preferred because of excellent copolymerizability thereof with the above-mentioned alkyl (meth)acrylate. Examples of the silane-based monomer include γ-methacryloxypropyltrimethoxysilane, 3-acryloyloxypropyltrimethoxysilane, 3-methacryloyloxypropyltriethoxysilane, 3-acryloyloxypropyltriethoxysilane, 3-methacryloyloxypropylmethyldimethoxysilane, 3-acryloyloxypropylmethyldimethoxysilane, 3-methacryloyloxypropylmethyldiethoxysilane, and 3-acryloyloxypropylmethyldiethoxysilane. These silane-based monomers can be used alone or in combination of two or more kinds thereof.

In addition to the above, examples of copolymerizable silane-based monomers that can be used include vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The amount of the crosslinking agent used can be appropriately selected depending on the type of the monomer raw material and the application of an adhesive article. In the present embodiment, the amount of the crosslinking agent relative to 100 parts by weight of the monomer raw material (excluding the crosslinking agent) is preferably in the range of 0.005 parts by weight to 5 parts by weight, and more preferably 0.01 part by weight to 3 parts by weight.

In the present embodiment, other crosslinking may also be used, and crosslinking using other crosslinking agents, UV crosslinking, radiation crosslinking such as electron beam crosslinking, and the like can be applied. As the other crosslinking agent, a commonly used crosslinking agent can be used, and examples thereof include organic peroxides, epoxy compounds, amino group-containing compounds, organic metal salts, metal alcoholates, metal chelates, hydrazide crosslinking agents, carbodiimide crosslinking agents, isocyanate crosslinking agents, and silane or silanol crosslinking agents. Other crosslinking agents may be either oil-soluble or water-soluble.

The adhesive layer can be formed using an adhesive composition, and the adhesive composition is preferably a water-dispersible adhesive composition.

The water-dispersible adhesive composition can be prepared, for example, by subjecting a monomer mixture containing the above-mentioned alkyl (meth)acrylate as a main component and a silane-based monomer to common emulsion polymerization to obtain an aqueous dispersion of a (meth)acrylic acid ester copolymer, and adding thereto, as necessary, the above-mentioned other crosslinking agent.

The reason why such excellent effects are achieved when using the above-mentioned water-dispersible adhesive composition containing the alkyl (meth)acrylate as a main component and a silane-based monomer is not necessarily clear, but intramolecular chains connecting crosslinking points within polymer molecules are long, making the polymer chains less likely to unravel. Since there is no water present after drying, hydrolysis does not occur, and even when adhesive layers of adhesive bodies come into contact with each other, condensation reactions or crosslinking reactions do not proceed, and therefore, reactions between the adhesive layers are unlikely to occur and self-adhesion is unlikely to occur. Therefore, it is presumed that even when the adhesive body is wound into a roll without a release liner, or a plurality of the adhesive bodies are stacked and the adhesive layers come into contact with each other, peeling will be easy at interfaces of the adhesive layers.

As the polymerization method, general batch polymerization, continuous dropwise polymerization, divided dropwise polymerization, and the like can be adopted, and a polymerization temperature is, for example, about 20°C to 100°C.

Examples of a polymerization initiator used in the polymerization include, but are not limited to, azo-based initiators such as 2,2'-azobis[N-(2-carboxyethyl)-2-methylpropionamidine]n-hydrate, 2,2'-azobisisobutyronitrile, 2,2'-azobis(2-methylpropionamidine)disulfate, 2,2'-azobis(2-amidinopropane)dihydrochloride, 2,2'-azobis[2-(5-methyl-2-imidazolin-2-yl)propane]dihydrochloride, and 2,2'-azobis(N,N'-dimethylene); persulfates such as potassium persulfate and ammonium persulfate; peroxide-based initiators such as benzoyl peroxide, t-butyl hydroperoxide and hydrogen peroxide; substituted ethane-based initiators such as phenyl-substituted ethane; aromatic carbonyl compounds; and redox-based initiators such as a combination of a persulfate and sodium hydrogen sulfite and a combination of a peroxide and sodium ascorbate. The amount of the polymerization initiator used is, for example, about 0.005 parts by weight to 1 part by weight with respect to 100 parts by weight of the total amount of the monomers.

A chain transfer agent may be used in the polymerization. Examples of the chain transfer agent include common chain transfer agents, such as mercaptans such as lauryl mercaptan and dodecanethiol. An amount of the chain transfer agent used is, for example, about 0.001 part by weight to 0.5 parts by weight with respect to the total amount of 100 parts by weight of the monomers.

As an emulsifier, anionic emulsifiers such as sodium lauryl sulfate, polyoxyethylene sodium lauryl sulfate, ammonium lauryl sulfate, sodium dodecylbenzenesulfonate, polyoxyethylene alkyl ether sodium sulfate, polyoxyethylene alkyl phenyl ether ammonium sulfate, and polyoxyethylene alkyl phenyl ether sodium sulfate; and nonionic emulsifiers such as polyoxyethylene alkyl ether and polyoxyethylene alkyl phenyl ether can be used. These emulsifiers may be used alone or in combination of two or more kinds thereof. An amount of the emulsifier used is, for example, about 0.2 parts by weight to 10 parts by weight, and preferably about 0.5 parts by weight to 5 parts by weight, with respect to the total amount of 100 parts by weight of the monomers.

Note that in addition to the above, the adhesive composition may also be prepared by obtaining the (meth)acrylic acid ester copolymer by a method other than emulsion polymerization, adding the crosslinking agent as necessary, and dispersing the obtained mixture in water with the emulsifier.

The adhesive composition may further contain, as necessary, a base (such as aqueous ammonia) or an acid for adjusting the pH thereof, and additives typically used in adhesives, such as an adhesive-imparting resin, a thickener, a surfactant, an anti-aging agent, a filler, a pigment, and a colorant.

As the adhesive-imparting resin, for example, one or two or more kinds selected from various kinds of adhesive-imparting resins such as rosin-based resins, rosin derivative resins, petroleum-based resins, terpene-based resins, phenol-based resins, and ketone-based resins can be used.

A content of the adhesive-imparting resin is preferably 60 parts by weight or less, more preferably 50 parts by weight or less, still more preferably 40 parts by weight or less, and further more preferably 30 parts by weight or less, with respect to 100 parts by weight of a base polymer.

Examples of the thickener include polyacrylic acid-based thickeners, urethane-based thickeners, and polyvinyl alcohol-based thickeners. Among these, the polyacrylic acid-based thickeners and urethane-based thickeners are preferred. A content of the thickener is preferably 10 parts by weight or less, and more preferably 5 parts by weight or less, with respect to 100 parts by weight of the base polymer.

A method for forming the adhesive body of the present embodiment is not particularly limited, and for example, in order to form the adhesive layer, the following methods can be adopted: a method (direct method) in which the adhesive composition is directly applied to a releasing or non-releasing substrate and then dried or cured; and a method (transfer method) in which the adhesive composition is applied to a releasing surface and then dried or cured to form an adhesive layer on the surface and this adhesive layer is thereafter attached and transferred to a substrate.

The adhesive composition can be applied by using a common coater such as a gravure roll coater, a reverse roll coater, a kiss roll coater, a dip roll coater, a bar coater, a knife coater, and a spray coater. The adhesive composition is applied such that a thickness of the adhesive layer after drying is, for example, about 10 µm to 100 µm. A drying temperature can be suitably adopted, and is preferably 40°C to 200°C, further preferably 50°C to 180°C, and particularly preferably 70°C to 120°C. As a drying time, an appropriate time can be adopted as needed. The above drying time is preferably 5 seconds to 20 minutes, more preferably 5 seconds to 10 minutes, and particularly preferably 10 seconds to 5 minutes.

Thermal crosslinking is conducted by a common method, for example, by performing heating to reach a temperature at which a crosslinking reaction proceeds, in accordance with a type of the crosslinking agent. A content of solvent-insoluble components of the adhesive layer after crosslinking is, for example, about 5 weight% to 70 weight%. Solvent-soluble components of the adhesive layer after crosslinking have a molecular weight (weight average molecular weight; in terms of standard polystyrene) of, for example, about 100,000 to 600,000, and preferably about 200,000 to 450,000. Molecular weights of the solvent-insoluble and solvent-soluble components of the adhesive layer after crosslinking can be set at any desired values, for example, by suitably regulating a proportion of the crosslinking agent or the functional group-containing monomer to a total amount of the monomers and a type and an amount of the chain transfer agent, in particular, the amounts of the crosslinking agent and the chain transfer agent.

**In** the case where the adhesive body has a linear shape, this linear adhesive body can be obtained, for example, by the following method. Such an adhesive body may, for example, be an adhesive body containing a core material and an adhesive.

A method for forming the linear adhesive body according to the present embodiment is not particularly limited, and examples thereof include a method in which an adhesive composition constituting an adhesive body is prepared, the adhesive composition is linearly applied onto a release liner using a dispenser to once form an adhesive body, and the release liner is removed. Note that in a case where the adhesive body is an adhesive body containing a core material and an adhesive layer, the adhesive layer can be formed on a surface of the core material by coating the surface of the core material with the adhesive composition by dipping, immersion, applying, or the like, followed by drying by heating. The adhesive composition can be applied by using a conventional coater such as a gravure roll coater, a reverse roll coater, a kiss roll coater, a dip roll coater, a bar coater, a knife coater, and a spray coater. A drying temperature can be suitably adopted, and is preferably 40°C to 200°C, further preferably 50°C to 180°C, and particularly preferably 70°C to 120°C. As a drying time, an appropriate time can be adopted as needed. The above drying time is preferably 5 seconds to 20 minutes, more preferably 5 seconds to 10 minutes, and particularly preferably 10 seconds to 5 minutes.

In a case of a linear adhesive body containing no core material and having a circular cross-sectional shape, a diameter of a cross section of the adhesive body is not particularly limited, but since too small a diameter may result in that the linear adhesive body is easily cut, the diameter thereof is, for example, preferably 20 µm or more, and more preferably 50 µm or more. Since too large a diameter may result in poor flexibility, the diameter thereof is, for example, preferably 1,000 µm or less, and more preferably 500 µm or less.

In a case of a linear adhesive body containing a core material, the adhesive layer may cover the whole surface (surface in a longitudinal direction) of the core material or may cover only a part of the surface of the core material. Although an adhesive layer is typically formed to be continuous, the adhesive layer is not limited to such a form, and may be formed in a regular pattern such as a dot pattern or a stripe pattern, or a random pattern. Note that an end surface of the core material may or may not be covered with the adhesive layer. For example, when an adhesive article is cut during a producing process or during use, the end surface of the core material may not be covered with the adhesive layer.

The core material to be used in the adhesive body is not particularly limited, and for example, a resin, a rubber, foam, an inorganic fiber, and a composite thereof can be used. It is preferably that the adhesive strength between the adhesive layer and the core material is higher than a self-adhesive strength between the adhesive layers, from the viewpoint of maintaining the shape of the adhesive body. Examples of the resin include a polyolefin such as polyethylene (PE), polypropylene (PP), an ethylene-propylene copolymer, and an ethylene-vinyl acetate copolymer; a polyester such as polyethylene terephthalate (PET); a vinyl chloride resin; a vinyl acetate resin; a polyimide resin; a polyamide resin; and a fluorine-based resin. Examples of the rubber include a natural rubber, and a synthetic rubber such as a urethane rubber. Examples of the foam include a foamed polyurethane and a foamed polychloroprene rubber. Examples of the fiber include a glass fiber, a carbon fiber, and a metal fiber. A cross-sectional shape of the core material is not particularly limited, and is generally a cross-sectional shape corresponding to a cross-sectional shape of the adhesive article.

A material of a threadlike core material usable in a threadlike adhesive body is not particularly limited, and may be a chemical fiber or a natural fiber. Examples of the chemical fiber include: various polymer materials such as rayon, cupra, acetate, promix, nylon, aramid, vinylon, vinylidene, polyvinyl chloride, polyester, acryl, polyethylene, polypropylene, polyurethane, polychlal, and polylactic acid; glasses; carbon fibers; synthetic rubbers such as polyurethane; and metals. Examples of the natural fiber include silk, natural rubber, cotton, and wool. Among these, the polyester is preferable as the material of the core material, and the polyethylene terephthalate (PET) is more preferable because physical properties such as a diameter and a tensile strength can be easily controlled.

As a form of the threadlike core material, for example, in addition to monofilaments, multifilaments, span yarns, finished yarns generally referred to as textured yarn, bulky yarn, and stretched yarn that are subjected to crimping process or bulking process, or combined yarns obtained by, for example, twisting those can be used. The cross-sectional shape thereof is not limited to a circular shape, and can be a quadrilateral shape, a short shape such as a star shape, an elliptic shape, a hollow shape, and the like.

Note that the core material may contain various additives such as a filler (an inorganic filler, an organic filler or the like), an anti-aging agent, an antioxidant, an ultraviolet absorber, an antistatic agent, a lubricant, a plasticizer, and a colorant (a pigment, a dye, or the like) as necessary. The known or common surface treatment such as a corona discharge treatment, a plasma treatment or application of an undercoat agent may be performed on a surface of the core material.

A size of the cross section of the core material is not particularly limited and can be suitably selected in accordance with purposes thereof, and for example, in the case where the cross-sectional shape is a circular shape, a diameter thereof is preferably 1 µm to 2,000 µm, and more preferably 10 µm to 1,000 µm from the viewpoint of handleability (difficulty in cutting).

In a case of the adhesive body containing a core material, the thickness of the adhesive layer is not particularly limited, and is, for example, preferably 1 µm or more, and more preferably 3 µm or more from the viewpoint of adhesiveness. The thickness of the adhesive layer is, for example, preferably 200 µm or less, and more preferably 150 µm or less from the viewpoint of drying properties.

In the case of the adhesive body containing a core material, the diameter of the adhesive body is not particularly limited, and is, for example, in the case where the cross-sectional shape is a circular shape, preferably 50 µm to 1,000 µm, more preferably 100 µm to 800 µm, and further preferably 200 µm to 600 µm from the viewpoint of processability.

When the adhesive body of the present embodiment has a linear shape, the adhesive body can be attached even to a narrow member or a narrow region while being prevented from protruding and can be easily disassembled (reworked), which is preferable. Hereinafter, the adhesive body having a linear shape is also referred to as a linear adhesive body. For example, the linear adhesive body of the present embodiment can be suitably used for fixing an article during production of an electronic device and fixing vehicle-mounted components, and can be applied to fixing of a narrow frame of a mobile terminal such as a mobile phone or a smartphone, and fixing of batteries, motors, and the like.

In addition, when the adhesive body according to the present embodiment has a linear shape, the adhesive body can be pushed into a narrow gap to adhere to a surface of the gap or fill the gap.

Further, the adhesive body according to the present embodiment preferably has flexibility, and is particularly preferably threadlike to be bendable in various directions at various angles, like a thread. The adhesive body having flexibility, in particular, the adhesive body that is threadlike has an advantage in that the adhesive body can be easily applied to complicated shapes such as a curved line, a curved surface, and an uneven shape in addition to the effects described above. Hereinafter, the adhesive body that is threadlike is also referred to as a threadlike adhesive body. The adhesive body of the present embodiment is preferably an adhesive body in a shape of a thread, that is, a threadlike adhesive body.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while preventing a protrusion, and the part where a wrinkle or overlapping occurs may cause a decrease in the adhesive strength. In order to stick the adhesive tape while preventing the occurrence of a wrinkle or overlapping, it is conceivable to stick the adhesive tape after finely cutting the adhesive tape. However, workability significantly deteriorates. On the other hand, the adhesive body having flexibility, in particular, the threadlike adhesive body can be firmly stuck without causing a wrinkle or overlapping even when being stuck to a part having a complicated shape such as a curved line, a curved surface, and an uneven shape. Further, since the threadlike adhesive body can be stuck to a part to be stuck at one time, that is, in one step, the threadlike adhesive body is excellent in workability and can be applied to an automation line.

Specifically, the threadlike adhesive body can be suitably used, for example, for fixing cables such as electric wires and optical fibers, optical fiber sensors such as LED fiber light and Fiber Bragg Gratings (FBG), various wire members (linear members) such as a yarn, a string, and a wire, and narrow members, in a desired form. For example, even in a case where a wire member or a narrow member is fixed to another member in a complicated shape, the threadlike adhesive body can be firmly fixed with excellent workability while suppressing protrusion, wrinkles, and overlapping in accordance with the complicated shape that the wire member or the narrow member have. In a case where the wire member or the narrow member is fixed to another member, the threadlike adhesive body is stuck in advance in accordance with a form in which the wire member or the narrow member is to be fixed on a surface of the other member, and then, the wire member or the narrow member can be bonded and fixed in accordance with the adhesive body stuck to the surface of the other member. Alternatively, the threadlike adhesive body is stuck to a wire member or a narrow member, and then, the wire member or the narrow member may be fixed to another member in a desired form.

The threadlike adhesive body can also be suitably used for temporary fixing (temporary tacking) of an article for temporarily fixing (temporarily tacking) one article to a surface of another article. More specifically, the threadlike adhesive body is particularly suitable for use in temporary fixing (temporary tacking) during production process of, for example, fiber products and leather products such as clothes, shoes, bags, and hats. However, the uses are not limited to these examples, and the threadlike adhesive body is suitably used for various applications in which temporary fixing (temporary tacking) is desired.

For example, when one article is fixed to a surface of the other article, the one article is temporarily fixed and positioned on the surface of the other article in advance using the threadlike adhesive body, and then both articles are fixed (finally fixed) by a fixing method such as thermocompression bonding and sewing. In this case, the threadlike adhesive body easily and temporarily fixes the two articles without a fixing portion provided between the two articles. For example, in a case where a fiber product or a leather product is sewn, when temporary fixing is performed using the threadlike adhesive body, the temporary fixing can be easily performed while avoiding a part to be sewed, and the pressure-sensitive adhesive can be easily prevented from adhering to a needle.

In addition, the threadlike adhesive body can be well stuck while preventing a protrusion, a wrinkle, and overlapping even when shapes of two articles are a complicated shape such as a curved line, a curved surface, and an uneven shape. Further, the threadlike adhesive body can be stuck in one step, and workability is good.

Even in a case of an easily deformable member, such as fabric, cloth, and leather that forms a fiber product or a leather product, temporary fixing can be performed using the threadlike adhesive body, so that deformation of the member due to tension can be prevented, and design aesthetics after fixing (final fixing) is improved.

Further, after two articles are fixed (finally fixed) using the threadlike adhesive body, the threadlike adhesive body can be pulled out and removed if necessary from the two articles that are fixed (finally fixed). In this case, the adhesive can be prevented from squeezing out, and deterioration of design aesthetics due to aging discoloration of the remaining adhesive can be satisfactorily prevented.

In the case of the threadlike adhesive body, the adhesive body can be twisted with a yarn made of other materials to form a composite yarn or can be woven with a yarn or cloth (including nonwoven fabrics and sheets) made of other materials, thereby function combination can be achieved.

Furthermore, the threadlike adhesive body can be used as a dam material for preventing squeezing out of a glue or an adhesive when a glue or an adhesive is applied to an adhesion object (adherend). The dam material can be used, for example, to prevent squeezing out of a sealing resin used for bonding an optical panel. **In** the case where the threadlike adhesive body is used as a dam material, the threadlike adhesive body may be peeled off or remain after the glue or the adhesive is cured.

### <Method for Producing Wound Body>

A method for producing a wound body according to an embodiment of the present invention is a method for producing of an adhesive body including an adhesive layer as an outermost layer, the method including a step of cheese-winding the adhesive body such that a lead angle is 2° to 40°. The lead angle in the step is preferably 5° to 35°, more preferably 10° to 30°, and still more preferably 12° to 28°.

In the method for producing a wound body in the present embodiment, preferred modes of the wound body and the adhesive body, as well as a method for determining the lead angle and a preferred mode thereof, are as described above. For example, in the method for producing a wound body according to one embodiment of the present invention, the adhesive body may be a threadlike adhesive body.

In the method for producing a wound body in the present embodiment, the step of cheese-winding the adhesive body may be performed manually or may be automated using industrial equipment or the like.

As described above, the following matters are disclosed in the present specification.
<1> A wound body formed by cheese-winding an adhesive body including an adhesive layer as an outermost layer, in which
   a lead angle is 2° to 40°.
<2> The wound body according to <1>, in which
   the adhesive body contains a core material and an adhesive.
<3> The wound body according to <1> or <2>, in which
   the adhesive body is a threadlike adhesive body.
<4> A method for producing a wound body of an adhesive body including an adhesive layer as an outermost layer, the method including:
   a step of cheese-winding the adhesive body such that a lead angle is 2° to 40°.
<5> The method according to <4>, in which
   the adhesive body is a threadlike adhesive body.

### Examples

Hereinafter, the present invention will be described in detail with reference to Examples, but the present invention is not limited to these Examples.

### <Example 1>

### [Preparation of threadlike adhesive tape]

### Preparation of Acrylic Adhesive (Coating Liquid 1)

Into a reaction vessel equipped with a cooling tube, a nitrogen introduction tube, a thermometer, and a stirrer, 40 parts by weight of ion-exchanged water was added, and stirring was performed at 60°C for 1 hour or more while introducing nitrogen gas to carry out nitrogen substitution. To this reaction vessel, 0.1 parts by weight of 2,2'-azobis[N-(2-carboxyethyl)-2-methylpropionamidine]n hydrate (polymerization initiator) was added. While the system was maintained at 60°C, a monomer emulsion A below was gradually added dropwise thereto over 4 hours to allow an emulsion polymerization reaction to proceed.

Examples of the monomer emulsion A include an emulsion obtained by adding 85 parts by weight of 2-ethylhexyl acrylate, 13 parts by weight of methyl acrylate, 1.25 parts by weight of acrylic acid, 0.75 parts by weight of methacrylic acid, 0.05 parts by weight of lauryl mercaptan (chain transfer agent), 0.02 parts by weight of γ-methacryloxypropyltrimethoxysilane (manufactured by Shin-Etsu Chemical Co., Ltd., trade name: "KBM-503"), and 2 parts by weight of sodium polyoxyethylene lauryl sulfate (emulsifier) to 30 parts by weight of ion-exchanged water.

After completion of the dropwise addition of the monomer emulsion A, the system was further kept at 60°C for 3 hours and cooled to room temperature, and pH was then adjusted to 7 by addition of 10% ammonia water to obtain an acrylic polymer emulsion (water-dispersible acrylic polymer).

An adhesive-imparting resin emulsion (manufactured by Arakawa Chemical Industries, Ltd., trade name: "E-865NT") was added so that the adhesive-imparting resin was 32 parts by weight per 100 parts by weight of the acrylic polymer contained in the acrylic polymer emulsion. Further, ion-exchanged water was added to adjust a solid content concentration thereof to 50 weight%, so as to obtain the coating liquid 1.

### [Production of Threadlike Adhesive Body and Wound Body]

As the core material, a multifilament yarn was prepared by twisting 70 times per meter of seven polyethylene terephthalate (PET) fibers (manufactured by Teijin Frontier Co., Ltd.) (fineness: 167 dtex, number of filaments: 48).

The core material was coated with the coating liquid 1 by dipping using a coating roller rotating at the same speed as a feeding speed. Thereafter, drying was performed at 100°C for 1 minute to obtain a threadlike adhesive body having a diameter (width in a short direction) of about 420 µm.

The above threadlike adhesive body was wound up by 100 m at a lead angle of 22.5° onto a bobbin (paper) ball core (manufactured by Sankyo Paper Co., Ltd.) having an outer diameter of 86 mm, an inner diameter of 76 mm, and a width of 230 mm, without using a release liner, to obtain a wound body of the threadlike adhesive body.

The obtained wound body was evaluated as follows. Results are shown in Table 1.

### [Preparation of Joint for Pull-off Test]

The threadlike adhesive body was unwound from the obtained wound body, and the adhesive body was stuck to an acrylonitrile-butadiene-styrene copolymer synthetic resin plate (ABS plate) (Kobe Polysteel ABS plate, manufactured by Showa Denko Materials Inc., 3.0 cm × 4.0 cm × 2.0 mm) so as to draw a spiral-like circle with an outer diameter of 25 mm, 5 circuits, and a pitch distance of 1.5 mm. The same ABS plate was further placed thereon and pressed with a press machine (Servo Press, manufactured by Hitachi Chemical Co., Ltd.) at a load of 0.35 MPa for 10 seconds to obtain a joint for adhesive strength evaluation.

### [Pull-off Test Method]

A cleavage peeling force of the obtained joint for adhesive strength evaluation was measured using a tensile tester (AG-X/R, manufactured by Shimadzu Corporation). The measurement was carried out at 23°C and a tensile speed of 300 mm/min. An obtained measured value was converted to a pull-off test force per unit area (N/mm²).

### [Appearance Evaluation]

Appearance defects of the threadlike adhesive unwound from the wound body were observed using a microscope (Microscope (VHX-7000), manufactured by Keyence Corporation) at a magnification of 50 times, and those with two or fewer glue lacking portions per 1 cm were rated as "good", and those with three or more glue lacking portions per 1 cm were rated as "bad".

### <Example 2>

A wound body of Example 2 was obtained in the same manner as in Example 1, except that the threadlike adhesive body was wound at a lead angle of 15°.

The obtained wound body was evaluated in the same manner as in Example 1. Results are shown in Table 1.

### <Example 3>

A wound body of Example 3 was obtained in the same manner as in Example 1, except that the threadlike adhesive body was wound at a lead angle of 7.5°.

The obtained wound body was evaluated in the same manner as in Example 1. Results are shown in Table 1.

### <Example 4>

A wound body of Example 4 was obtained in the same manner as in Example 1, except that the threadlike adhesive body was wound at a lead angle of 2.5°.

The obtained wound body was evaluated in the same manner as in Example 1. Results are shown in Table 1.

### <Example 5>

A wound body of Example 5 was obtained in the same manner as in Example 1, except that the threadlike adhesive body was wound at a lead angle of 27.5°.

The obtained wound body was evaluated in the same manner as in Example 1. Results are shown in Table 1.

### <Comparative Example 1>

A wound body of Comparative Example 1 was obtained in the same manner as in Example 1, except that the threadlike adhesive body was wound at a lead angle of 0.1°.

The obtained wound body was evaluated in the same manner as in Example 1. Results are shown in Table 1.

### <Comparative Example 2>

A wound body of Comparative Example 2 was obtained in the same manner as in Example 1, except that the threadlike adhesive body was wound at a lead angle of 42°.

The obtained wound body was evaluated in the same manner as in Example 1. Results are shown in Table 1.

### [Table 1]

**Table 1**

| | | | Example 1 | Example 2 | Example 3 | Example 4 |
|---|---|---|---|---|---|---|
| Threadlike adhesive body | Adhesive | Type | Acrylic | Acrylic | Acrylic | Acrylic |
| | Core material | Material | PET | PET | PET | PET |
| | | Fineness (detex) | 167 | 167 | 167 | 167 |
| | | Number of filaments | 48 | 48 | 48 | 48 |
| | | Composite yarn number | 7 | 7 | 7 | 7 |
| | | Number of twists (twist/m) | 70 | 70 | 70 | 70 |
| | Product thickness (diameter) | | 420 µm | 420 µm | 420 µm | 420 µm |
| Wound body | Lead angle | | 22.5° | 15° | 7.5° | 2.5° |
| Characteristics | Pull-off test force (N/mm²) | | 70.4 | 63.1 | 58.8 | 57.9 |
| | Appearance evaluation | | Good | Good | Good | Good |

| | | | Example 5 | Comparative Example 1 | Comparative Example 2 | |
|---|---|---|---|---|---|---|
| Threadlike adhesive body | Adhesive | Type | Acrylic | Acrylic | Acrylic | |
| | Core material | Material | PET | PET | PET | |
| | | Fineness (detex) | 167 | 167 | 167 | |
| | | Number of filaments | 48 | 48 | 48 | |
| | | Composite yarn number | 7 | 7 | 7 | |
| | | Number of twists (twist/m) | 70 | 70 | 70 | |
| | Product thickness (diameter) | | 420 µm | 420 µm | 420 µm | |
| Wound body | Lead angle | | 27.5° | 0.1° | 42° | |
| Characteristics | Pull-off test force (N/mm²) | | 71.0 | 49.8 | 60.0 | |
| | Appearance evaluation | | Good | Good | Bad | |

As shown in Table 1, in all of the wound bodies of Examples, the adhesive strength of the adhesive body did not decrease, and no deterioration in appearance due to glue lacking was observed after unwinding. In contrast, in the wound bodies of Comparative Examples in which the adhesive body was wound at a lead angle outside the predetermined range, the adhesive strength of the adhesive body was decreased and/or the appearance was deteriorated due to glue lacking after unwinding.

The present invention is not limited to the embodiments described above, and can be made in various modifications within the scope of the claims, and embodiments obtained by appropriately combining technical methods disclosed in different embodiments are also included in the technical scope of the present invention.

Although various embodiments have been described above, the present invention is not limited to these examples. It is apparent that a person skilled in the art could conceive of various changes or modifications within the scope of claims, and these changes or modifications are considered to belong to the technical range of the present invention as a matter of course. The components described in the above embodiments may be freely combined without departing from the spirit of the present invention.

Note that, the present application is based on a Japanese Patent Application (No. 2022-181326) filed on November 11, 2022, contents of which are incorporated herein by reference.

### INDUSTRIAL APPLICABILITY

According to the wound body of the present invention, even though the adhesive body does not include a release liner, a decrease in adhesive strength of the adhesive body and/or a deterioration in appearance due to glue lacking will not occur after unwinding. Therefore, the wound body of the present invention can be utilized for storing and transporting the adhesive body.

### REFERENCE SIGNS LIST

- 1: lead angle
- 2: rotation direction of wound body
- 3: width direction of wound body
- 4: adhesive body
- 10: wound body

## Claims

1. A wound body formed by cheese-winding an adhesive body including an adhesive layer as an outermost layer, wherein
a lead angle is 2° to 40°.

2. The wound body according to claim 1, wherein
the adhesive body contains a core material and an adhesive.

3. The wound body according to claim 1 or 2, wherein
the adhesive body is a threadlike adhesive body.

4. A method for producing a wound body of an adhesive body including an adhesive layer as an outermost layer, the method comprising:
a step of cheese-winding the adhesive body such that a lead angle is 2° to 40°.

5. The method according to claim 4, wherein
the adhesive body is a threadlike adhesive body.
